# FASCICULE DE BREVET EUROPEEN

(11) **EP 3 983 653 B1**
(45) Date de publication et mention de la délivrance du brevet: **26.04.2023**
(21) Numéro de dépôt: 20734208.0
(22) Date de dépôt: 25.06.2020
(51) Int. Cl.: F01D 17/20, F01D 21/00, H04Q 9/00, F01D 5/28

(54) **AUBE POUR SOUFFLANTE DE TURBOMACHINE COMPORTANT UN SUPPORT D'IDENTIFICATION ET PROCÉDÉ DE LECTURE D'UN TEL SUPPORT D'IDENTIFICATION**
GEBLÄSESCHAUFEL EINER TURBOMASCHINE MIT EINEM KENNZEICHNUNGSHILFSMITTEL UND VERFAHREN UM DIESES HILFSMITTEL ZU ENTSCHLÜSSELN
FAN BLADE OF A TURBOMACHINE COMPRISING AN IDENTIFYING MEAN AND A PROCESS FOR READING SUCH MEAN

(30) Priorité: 16.07.2019 FR 1907989
(43) Date de publication de la demande: 20.04.2022
(73) Titulaire: SAFRAN AIRCRAFT ENGINES, 75015 Paris (FR)
(72) Inventeur: LHOMMEAU, Tony, Alain, Roger, Joël, 77550 MOISSY-CRAMAYEL (FR); SOTERAS, Dimitri, Germinal, 77550 MOISSY-CRAMAYEL (FR); SIROT, Clément, René, Roger, 77550 MOISSY-CRAMAYEL (FR); VITALIS, Alain, Laurent, Christian, 77550 MOISSY-CRAMAYEL (FR)
(74) Mandataire: Argyma
(86) Numéro de dépôt international: PCT/EP2020/067806
(87) Numéro de publication internationale: WO 2021/008842

(56) Documents cités:
- DE-A1-102015 105 357
- US-A1- 2011 133 949
- US-A1- 2015 061 893

## Description

### DOMAINE TECHNIQUE DE L'INVENTION

La présente invention concerne le domaine des turbomachines utilisées pour la propulsion d'un aéronef et, notamment, une turbomachine comportant des aubes de soufflante.

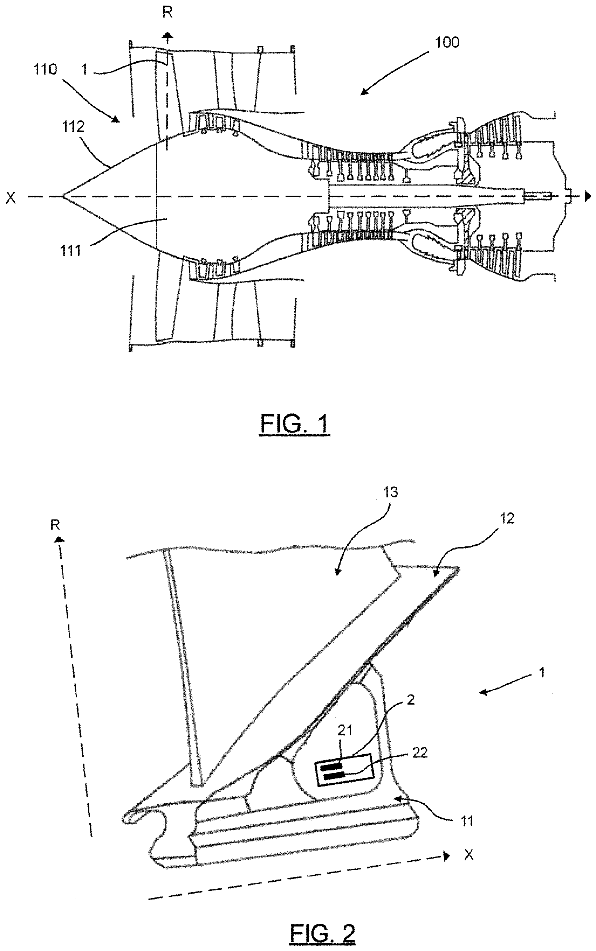

De manière connue, en référence à la figure 1, il est représenté une turbomachine 100 s'étendant selon un axe de turbomachine X et permettant de déplacer l'aéronef à partir d'un flux d'air entrant dans la turbomachine 100 et circulant d'amont en aval. Par la suite, les termes « amont » et « aval » sont définis par rapport à l'axe de turbomachine X orienté d'amont en aval. De même, les termes « intérieur » et « extérieur » sont définis selon une direction radiale R définie par rapport à l'axe X. De manière connue, la turbomachine 100 comprend un compresseur, une chambre de combustion et une turbine pour entraîner en rotation le compresseur. La turbomachine 100 comporte en amont une soufflante 110 qui permet d'accélérer le flux d'air de l'amont vers l'aval dans la turbomachine 100.

La soufflante 110 comprend un disque 111, solidaire en rotation d'un arbre du compresseur, comprenant des logements, répartis à la périphérie du disque 111, dans lesquels sont respectivement montés des aubes 1 par insertion axiale selon l'axe de turbomachine X d'amont vers l'aval. Les aubes 1 s'étendent dans un même plan transversal à l'axe de turbomachine X. Dans cet exemple, la turbomachine 100 comporte un cône 112 qui est monté en amont du disque 111.

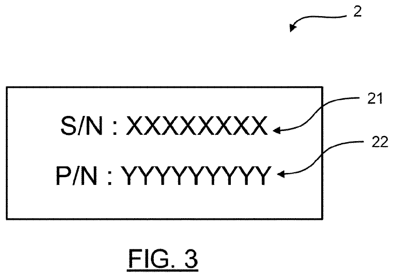

De manière préférée, en référence à la figure 2, chaque aube 1 s'étend radialement selon un axe R par rapport à l'axe de turbomachine X et comprend successivement un pied de montage 11, radialement intérieur, configuré pour être monté dans un desdits logements du disque 111, une plateforme 12 et une pale radiale de déviation d'air 13, radialement extérieure. De manière connue, chaque aube de soufflante 1 est identifiée de manière unique par un numéro de série connu sous sa désignation anglaise « serial number SN » et un numéro de version connu sous sa désignation anglaise « part number PN ». En référence aux figures 2 et 3, le numéro de série 21 et le numéro de version 22 sont écrits sur un support 2, de préférence en tissu, qui est fixé sur une partie du pied de montage 11 et recouvert d'un vernis de protection.

En pratique, la soufflante 110 d'une turbomachine 100 doit être équipée d'aubes de soufflante 1 adéquates pour que la turbomachine 100 puisse fonctionner de manière optimale. En particulier, il est nécessaire de vérifier que les aubes 1 d'une même soufflante 110 possèdent des numéros de série 21 et des numéros de version 22 qui sont compatibles.

Un problème se pose pour les sociétés qui louent des turbomachines à des clients étant donné que les clients peuvent être amenés à remplacer une ou plusieurs aubes 1 de soufflante 110 au cours de la période de location. Lors du retour de la turbomachine, il appartient au loueur de vérifier que les aubes 1 qui sont montées dans la soufflante 110 sont bien compatibles avant de pouvoir louer de nouveau la turbomachine. La vérification des numéros de série 21 et des numéros de version 22 des aubes 1 d'une soufflante 110 est particulièrement pénible et chronophage.

En effet, pour accéder visuellement au support 2 comprenant le numéro de série 21 et le numéro de version 22, un opérateur doit démonter la partie amont de la turbomachine, en particulier, le cône de soufflante 112, une virole, des verrous et des cales avant d'accéder aux aubes 1. Après lecture du numéro de série 21 et du numéro de version 22, l'opérateur doit remonter la partie amont de la turbomachine, ce qui est long et augmente le risque d'endommagement et d'erreur de montage (non-conformité). En outre, une telle méthode ne protège pas l'opérateur contre une erreur de saisie des numéros de série 21 et des numéros de version 23.

De manière incidente, dans une autre application, on connaît dans l'art antérieur par la demande de brevet EP2224379A1 d'utiliser un support du type radio-identification, plus connu sous son acronyme anglais RFID, sur une aube de compresseur afin de suivre son état au cours du fonctionnement du turbomoteur. A cet effet, un lecteur de radio-identification est prévu dans le turbomoteur pour lire le support RFID au cours du temps. Un tel enseignement n'est pas pertinent pour un opérateur qui cherche à identifier une aube depuis l'extérieur du turbomoteur. En effet, le turbomoteur comporte de nombreuses pièces métalliques qui réalisent un blindage électromagnétique et forme une cage de Faraday.

L'invention se propose d'éliminer au moins certains de ces inconvénients.

Le document US2011133949A1 enseigne de disposer des capteurs dans une turbomachine reliés de manière filaire à une antenne afin que cette dernière puisse transmettre les mesures issues des capteurs à un calculateur déporté de manière sans fil.

### PRESENTATION DE L'INVENTION

L'invention concerne une aube pour soufflante de turbomachine d'aéronef s'étendant selon un axe de turbomachine selon les caractéristiques techniques de la revendication indépendante 1.

L'invention est remarquable en ce que, la zone de fixation comportant des fibres longitudinales orientées selon un axe de fibre privilégié, le support d'identification comporte au moins une mémoire de stockage d'une donnée d'identification de l'aube et au moins une antenne radio comportant au moins un lobe de communication configuré pour recevoir une requête de lecture et émettre en retour la donnée d'identification, le lobe de communication étant orienté selon un axe radio qui est écarté angulairement de l'axe de fibre privilégié de moins de 45°, de préférence, de moins de 22.5°.

De manière avantageuse, grâce à l'invention, il existe une synergie entre le lobe de communication du support d'identification et les fibres longitudinales de la zone de fixation qui permet de s'affranchir du blindage électromagnétique de la soufflante dont la structure forme une cage de Faraday. Le préjugé consistant à communiquer de manière radio avec des bonnes performances à l'extérieur de la turbomachine est ainsi vaincu.

Grâce à l'invention, il n'est pas nécessaire pour un opérateur de démonter une partie amont de la soufflante pour atteindre les aubes et lire le numéro de série et le numéro de version de chaque aube. Un opérateur peut obtenir de manière rapide et pratique les données d'identification de manière radio à distance de la soufflante. Le risque d'endommagement des aubes de soufflante ainsi que celui d'erreur de saisie des données d'identification sont très limités.

Selon un aspect, l'aube comprend successivement un pied de montage configuré pour être monté selon l'axe de turbomachine, une plateforme et une pale de déviation d'air, la zone de fixation appartenant au pied de montage. Une fixation sur le pied de montage est avantageuse étant donné que le support d'identification ne perturbe pas le flux aérodynamique lors de l'utilisation de la turbomachine. L'inconvénient du pied de montage est qu'il appartient à une zone dont le blindage électromagnétique est important. Grâce à l'invention, cet inconvénient est avantageusement éliminé.

De préférence, le pied de montage comporte au moins une paroi latérale, définie de manière azimutale par rapport à l'axe de la turbomachine lorsque l'aube est montée sur ladite turbomachine, la paroi latérale comportant des fibres longitudinales dont l'axe de fibre privilégié s'étend sensiblement orthogonalement à l'axe de la turbomachine lorsque l'aube est montée sur ladite turbomachine, la zone de fixation appartenant à la paroi latérale. Une paroi latérale possède une surface importante pour recevoir un support d'identification de dimensions importantes. Une fois le pied monté dans un disque de soufflante, le blindage électromagnétique est très important mais cet inconvénient est éliminé par l'invention.

De préférence encore, le pied de montage comporte au moins une paroi amont, définie de manière axiale par rapport à l'axe de la turbomachine lorsque l'aube est montée sur ladite turbomachine, un flux d'air circulant d'amont vers l'aval dans la turbomachine, la paroi amont comporte des fibres longitudinales dont l'axe de fibre privilégié s'étend sensiblement orthogonalement à l'axe de la turbomachine lorsque l'aube est montée sur ladite turbomachine, la zone de fixation appartenant à la paroi amont. Une paroi amont possède l'avantage d'être moins sujette au blindage électromagnétique mais possède une surface plus étroite.

Selon un autre aspect, l'aube comprend successivement un pied de montage configuré pour être monté axialement selon un axe de turbomachine d'amont vers l'aval, une plateforme et une pale de déviation d'air s'étendant radialement selon un axe par rapport à l'axe de turbomachine, la zone de fixation appartenant à la plateforme, de préférence, à une paroi radialement intérieure de la plateforme. Une fixation sur une paroi radialement intérieure de la plateforme est avantageuse étant donné que le support d'identification ne perturbe pas le flux aérodynamique lors de l'utilisation de la turbomachine.

Dans les trois configurations précédentes, l'axe radio du lobe de communication de l'antenne radio est orienté sensiblement orthogonalement à l'axe d'une turbomachine lorsque l'aube est montée sur ladite turbomachine. Une telle orientation va à l'encontre d'un montage selon l'art antérieur qui enseignait de placer un support d'identification selon l'axe de la turbomachine pour être lu visuellement.

De manière préférée, le support d'identification est du type radio-identification. Un tel support d'identification est robuste et permet de collecter des données d'identification de manière pratique.

De préférence, le support d'identification est un support d'identification pour une zone de fixation métallique. Un tel support d'identification s'oppose aux supports dédiés aux supports non-métalliques ou supports mixtes connus de l'homme du métier. Un support d'identification pour une zone de fixation métallique permet d'augmenter l'amplification du lobe de communication, en particulier, lorsque les fibres sont non métalliques et que le support d'identification est configuré pour être monté sur une surface métallique.

Selon un aspect préféré, le support d'identification comporte un corps de forme allongée dans lequel sont montés la mémoire de stockage et l'antenne radio.

L'invention concerne également un procédé de lecture d'un support d'identification d'au moins une aube de soufflante telle que présentée précédemment, comprenant :
- une étape de réception, par voie radio, d'une requête de lecture par l'antenne radio du support d'identification et
- une étape d'émission, par voie radio, d'au moins une donnée d'identification de la mémoire de stockage par l'antenne radio du support d'identification.

De manière avantageuse, les données d'identification d'une aube individuelle peuvent être lues de manière rapide et pratique.

Il est également présenté un procédé de lecture des supports d'identification d'une pluralité d'aubes de soufflante telles que présentées précédemment, comprenant :
- une étape de réception, par voie radio, d'une requête de lecture par l'antenne radio de chaque support d'identification et
- une étape d'émission, par voie radio, d'au moins une donnée d'identification de la mémoire de stockage par l'antenne radio de chaque support d'identification.

De manière avantageuse, les données d'identification des aubes peuvent être lues collectivement de manière rapide et pratique, c'est-à-dire à partir d'une pluralité d'aubes de soufflante.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'une turbomachine selon l'art antérieur ;
La figure 2 est une représentation schématique d'une aube de soufflante avec un support d'identification selon l'art antérieur ;
La figure 3 est une représentation schématique du support d'identification de la figure 2 ;
La figure 4 est une représentation schématique d'une étape de lecture des données d'identification d'une aube de soufflante d'une turbomachine selon l'invention.
La figure 5 est une représentation schématique d'une aube de soufflante avec un support d'identification selon une forme de réalisation de l'invention ;
La figure 6 est une représentation schématique en coupe longitudinale d'un support d'identification selon une forme de réalisation de l'invention ;
La figure 7 est une représentation schématique de dessus d'un support d'identification comportant un lobe radio en position montée ;
La figure 8 est une représentation schématique de dessus d'un support d'identification comportant deux lobes radio en position montée ;
La figure 9 est une représentation schématique de dessus d'un support d'identification de forme carrée comportant un lobe radio en position montée ;
La figure 10 est une représentation schématique d'un support d'identification selon l'invention ne comportant pas d'informations visuelles ;
La figure 11 est une représentation schématique d'un support d'identification selon l'invention comportant des informations visuelles ;
La figure 12 est une représentation schématique d'une aube de soufflante avec un support d'identification selon une autre forme de réalisation de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

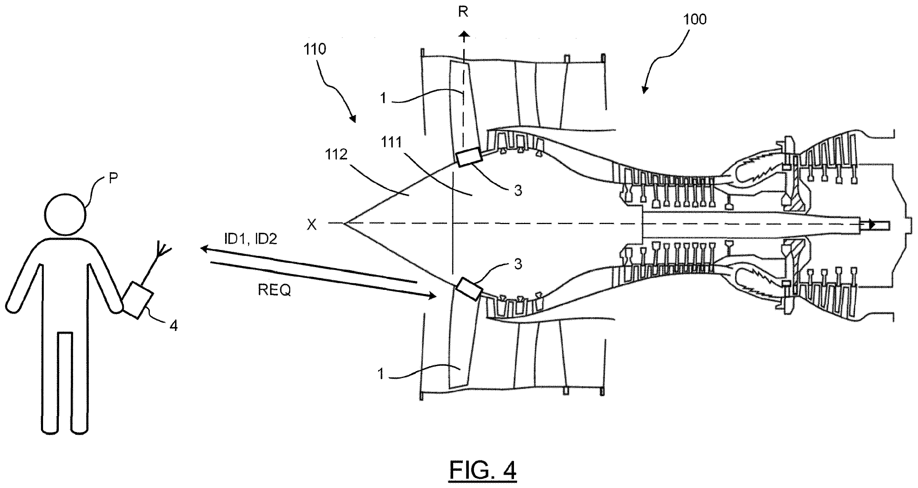

En référence à la figure 4, il est représenté une turbomachine 100 s'étendant selon un axe de turbomachine X et permettant de déplacer l'aéronef à partir d'un flux d'air entrant dans la turbomachine 100 et circulant d'amont en aval. Par la suite, les termes « amont » et « aval » sont définis par rapport à l'axe de turbomachine X orienté d'amont en aval. De même, les termes « intérieur » et « extérieur » sont définis selon une direction radiale R définie par rapport à l'axe X. De manière connue, la turbomachine 100 comprend un compresseur, une chambre de combustion et une turbine pour entraîner en rotation le compresseur. La turbomachine 100 comporte en amont une soufflante 110 qui permet d'accélérer le flux d'air de l'amont vers l'aval dans la turbomachine 100.

La soufflante 110 comprend un disque 111, solidaire en rotation d'un arbre du compresseur, comprenant des logements, répartis à la périphérie du disque 111, dans lesquels sont respectivement montés des aubes 1 par insertion axiale selon l'axe de turbomachine X d'amont vers l'aval. Les aubes 1 s'étendent dans un même plan transversal à l'axe de turbomachine X. Par souci de clarté et de concision, une seule aube 1 va être dorénavant présentée. Dans cet exemple, la turbomachine 100 comporte un cône 112 qui est monté en amont du disque 111.

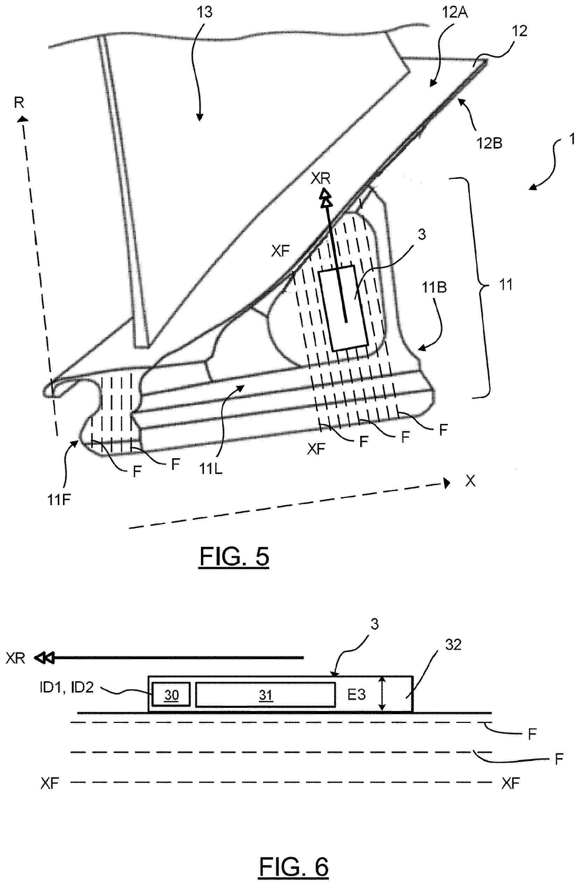

En référence à la figure 5, chaque aube 1 s'étend selon un axe radial R et comprend successivement un pied de montage 11 configuré pour être monté axialement selon un axe de turbomachine X dans un logement du disque 111 de la soufflante 110, une plateforme 12 et une pale de déviation d'air 13 s'étendant radialement selon l'axe radial R par rapport à l'axe de turbomachine X. L'aube 1 s'étend radialement en position montée. Le pied de montage 11 est ainsi qualifié de radialement intérieur tandis que la pale de déviation d'air 13 est qualifiée de radialement extérieure.

Comme illustré à la figure 5, la plateforme 12 comporte une face radialement extérieure 12A qui est dans le flux d'air et une face radialement intérieure 12B qui est opposée à la face radialement extérieure 12A. Le pied de montage 11 comporte deux parois latérales 11L, appelées également parois azimutales, une paroi amont 11F et une paroi aval 11B. Les parois 11L, 11B, 11F s'étendent sensiblement radialement selon l'axe radial R comme illustré à la figure 5. Les parois du pied de montage 11 sont définies par rapport à leur montage dans la turbomachine.

L'aube 1 est réalisée dans un matériau composite comportant une pluralité de fibres longitudinales F noyées dans une matrice. Selon l'invention, les fibres longitudinales F sont conductrices de l'électricité tandis que la matrice n'est pas conductrice de l'électricité. De manière préférée, les fibres longitudinales F sont des fibres de renfort, en particulier, métalliques. Dans cet exemple, les fibres longitudinales F sont en carbone mais il va de soi que d'autres matériaux pourraient convenir, par exemple en aluminium ou cuivre. La matrice est dans cet exemple thermodurcissable mais elle pourrait être de nature différente. Une aube 1 en matériau composite est connue de l'homme du métier et ne sera pas présentée plus en détails.

De manière connue, dans une zone locale de l'aube 1, les fibres longitudinale F sont orientées selon un axe de fibre privilégié XF. Autrement dit, les fibres longitudinales F sont parallèles localement et orientées selon un axe de fibre privilégié XF. Par axe de fibre privilégié XF, on entend l'axe auquel la majorité des fibres F sont parallèles dans ladite zone locale.

En pratique, les fibres F sont tissées dans plusieurs directions, en particulier selon un tissage 3D, dont une direction est privilégiée qui est désignée par la suite « axe de fibre privilégié XF » et qui est parfaitement identifiée lors d'un tissage.

Dans cet exemple, toujours en référence à la figure 5, la paroi latérale 11L du pied de montage 11 comporte des fibres longitudinales F qui sont orientées selon un axe de fibre privilégié XF qui est sensiblement radial, c'est-à-dire, orthogonal à l'axe X de la turbomachine. De même, la paroi amont 11L du pied de montage 11 comporte des fibres longitudinales F qui sont orientées selon un axe de fibre privilégié XF qui est sensiblement radial, c'est-à-dire, orthogonal à l'axe X de la turbomachine. De même, la plateforme 12 et la pale de déviation d'air 13 comportent des fibres longitudinales F.

Selon l'invention, en référence à la figure 5, l'aube 1 comporte au moins une zone de fixation sur laquelle est fixé un support d'identification 3 comportant au moins une donnée d'identification ID1, ID2 de l'aube 1. Une zone de fixation est une zone locale pour laquelle un axe de fibre privilégié XF est déterminé.

En référence à la figure 6, il est représenté un support d'identification 3 selon une forme de réalisation de l'invention.

Le support d'identification 3 comporte une mémoire de stockage 30 dans laquelle sont stockées deux données d'identification ID1, ID2, en particulier, un numéro de série ID1 connu sous sa désignation anglaise « serial number SN » et un numéro de version ID2 connu sous sa désignation anglaise « part number PN ». De manière préférée, la mémoire de stockage 30 est du type informatique et les données d'identification ID1, ID2 sont informatiques. Il va de soi que la mémoire de stockage 30 pourrait stocker une unique donnée d'identification telle qu'un identifiant unique qui permettrait d'identifier de façon particulière une pièce ou plus de deux données d'identification tel qu'un identifiant du fabricant (code CAGE ...), une date de fabrication, un degré de sensibilité à des fluides spécifiques, une référence d'autorisation d'exploitation, des données liées aux opérations de vécus de maintenance ou de logistique de la pièce tel que le statut opérationnel, les opérations réalisées ...

Le support d'identification 3 comporte en outre une antenne radio 31 configurée pour recevoir une requête de lecture REQ et émettre en retour les données d'identifications ID1, ID2. De manière préférée, le support d'identification 3 est du type radio-identification, plus connu sous son acronyme anglais RFID. Le support d'identification 3 peut comprendre une batterie ou être alimenté à distance. Un tel support d'identification 3 est connu de l'homme du métier.

De manière connue, parmi les supports d'identification du type radio-identification, on distingue ceux destinés à une utilisation « non métallique », ceux destinés à une utilisation « métallique » et ceux destinés à une utilisation « mixte ». De manière préférée, le support d'identification 3 est destiné à une utilisation « métallique ». Un tel support d'identification 3 possède des performances plus élevées par interaction avec les fibres longitudinales F de l'aube 1 qui sont conductrices de l'électricité comme cela sera présenté par la suite. En référence à la figure 6, un support d'identification 3 destiné à une utilisation « métallique » possède une épaisseur E3 qui est supérieure à 1mm, de préférence, supérieure à 2mm. En comparaison, un support d'identification 3 destiné à une utilisation « non métallique » possède une épaisseur inférieure à 1mm.

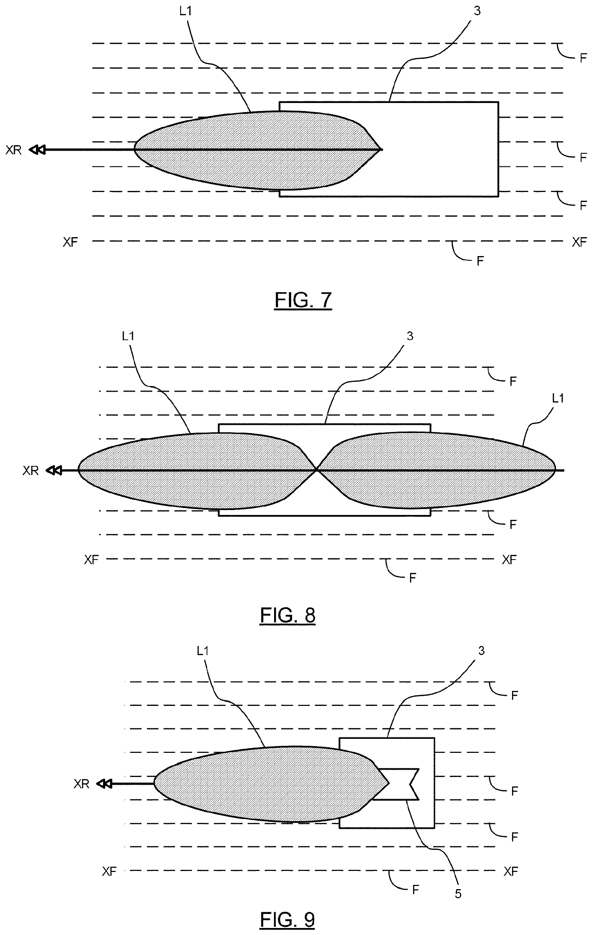

Selon l'invention, l'antenne radio 31 comporte au moins un lobe de communication L1 orienté selon un axe radio XR pour recevoir une requête de lecture REQ et émettre en retour les données d'identifications ID1, ID2. En référence aux figures 6 et 7, l'antenne radio 31 comporte un unique lobe de communication L1, appelé également lobe primaire, mais il va de soi qu'elle pourrait en comprendre plus d'un, en particulier deux. Comme illustré à la figure 8, l'antenne radio 31 peut notamment comporter deux lobes de communication L1 alignés selon un même axe radio XR. Un tel support d'identification 3 peut ainsi être utilisé selon deux sens opposés, selon une même direction.

Dans cet exemple, en référence à la figure 6, le support d'identification 3 comporte un corps 32, en particulier non conducteur, tel qu'une matière polymère ou céramique, dans lequel sont montés la mémoire 30 et l'antenne radio 31. En référence aux figures 6 et 7, le corps 32 possède une forme rectangulaire mais il va de soi qu'elle pourrait être quelconque en particulier une forme carrée ou une forme ronde ou filaire.

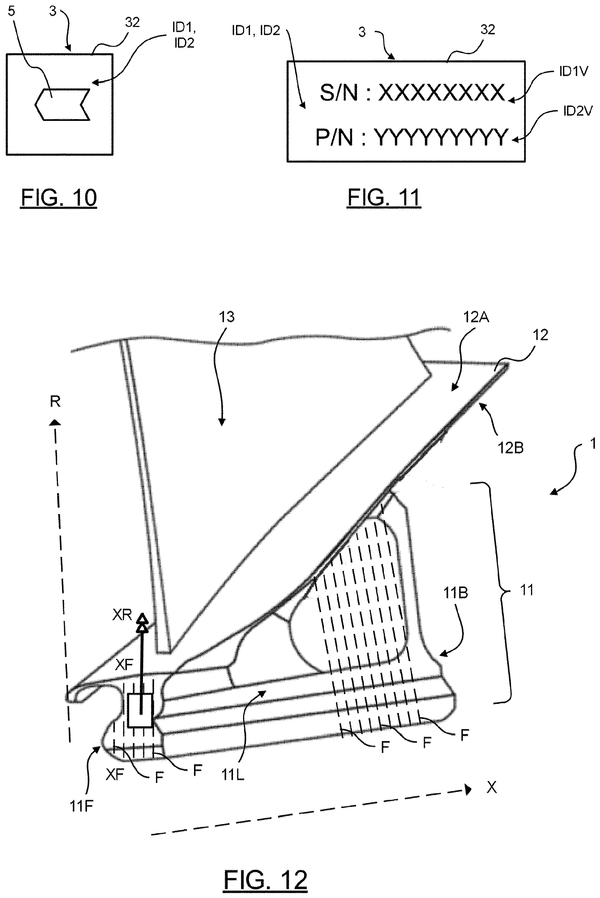

De manière préférée, dans le cas d'un corps 32 de forme allongée, l'axe radio XR s'étend selon la longueur dudit corps 32 comme illustré aux figures 6 à 8. En référence à la figure 9, lorsque le corps 32 n'est pas allongé, le corps 32 comprend de manière avantageuse un indicateur visuel d'orientation 5 de l'axe radio XR comme illustré aux figures 9 et 10 afin de permettre une orientation optimale du support d'identification 3 sur une zone de fixation de l'aube 1 par un opérateur comme cela sera présenté par la suite.

Comme illustré à la figure 11, le support d'identification 3 comporte les données d'identification ID1, ID2 sous forme informatique mais également des indicateurs visuels d'identification ID1V, ID2V afin de permettre de lire les données d'identification de manière radio et de manière visuelle. Dans cet exemple, les indicateurs visuels d'identification ID1V, ID2V sont imprimés sur le corps 32 du support d'identification 3. De préférence, lorsque les dimensions du support d'identification 3 sont trop étroites au regard des indicateurs visuels d'identification ID1V, ID2V, le support d'identification 3 comporte uniquement les données d'identification ID1, ID2 sous forme informatique comme illustré à la figure 10.

Selon l'invention, en référence à la figure 5, le support d'identification 3 est fixé sur une zone de fixation de l'aube 1 comportant des fibres longitudinales F orientées selon un axe de fibre privilégié XF. De manière avantageuse, le lobe de communication L1 est orienté selon un axe radio XR qui est écarté angulairement de l'axe de fibre privilégié XF de moins de 45°, de préférence de moins de 22.5°. De manière préférée, l'axe radio XR est parallèle à l'axe de fibre privilégié XF. De préférence, l'axe radio XR et l'axe de fibre privilégié XF sont alignés.

Lorsqu'une antenne radio 31 comporte plusieurs lobes de communication L1, il est préférable que le lobe de communication principal L1 soit aligné en respectant l'alignement défini avec l'axe de fibre privilégié XF.

De manière avantageuse, l'utilisation d'un support d'identification 3 destiné à une utilisation « métallique » renforce les interactions entre les fibres conductrices longitudinales F qui sont conductrices et l'antenne radio 30, ce qui améliore l'amplification. Les données d'identification ID1, ID2 peuvent être lues à une distance plus importante. De manière préférée, un organe d'interface métallique est positionné entre le support d'identification 3 et la zone de fixation pour améliorer les performances de communication. L'organe d'interface métallique est de préférence conducteur de l'électricité (par exemple en Al, Ti, Cu, Pt, Au, Fe, Pb, Sn, Ni ou analogue ainsi que leurs combinaison). De manière préférée, l'organe d'interface métallique possède une épaisseur comprise entre 0.001mm et 20mm. Selon un aspect de l'invention, l'organe d'interface métallique est monté sur le composite par collage pour faciliter sa mise en place.

Selon une première forme de réalisation, en référence à la figure 5, une paroi latérale 11L du pied de montage 11 comporte la zone de fixation du support d'identification 3. La paroi latérale 11L possède une surface importante permettant la fixation du support d'identification 3. Dans cet exemple, les fibres longitudinales F de la paroi latérale 11L du pied de montage 11 s'étendent radialement selon l'axe R et le support d'identification 3 est orienté de manière à ce que l'axe radio XR soit orienté radialement selon l'axe R vers l'extérieur de manière à bénéficier des meilleures conditions de communication. De manière préférée, le support d'identification 3 est fixé sur une portion aval de la paroi latérale 11L étant donné qu'elle possède une hauteur radiale plus importante et de nombreuses fibres F radiales.

Dans cette forme de réalisation, étant donné que l'espace disponible est important, le support d'identification 3 possède une forme allongée et comporte des indicateurs visuels d'identification ID1V, ID2V (Figure 11) afin de permettre de lire les données d'identification de manière radio et de manière visuelle.

Selon une deuxième forme de réalisation, en référence à la figure 12, une paroi amont 11F du pied de montage 11 comporte la zone de fixation du support d'identification 3. La paroi amont 11F, appelée également échasse, possède une surface réduite permettant néanmoins la fixation du support d'identification 3. Dans cet exemple, les fibres longitudinales F de la paroi amont 11F du pied de montage 11 s'étendent radialement et le support d'identification 3 est orienté de manière à ce que l'axe radio XR soit orienté radialement selon l'axe R vers l'extérieur de manière à bénéficier des meilleures conditions de communication.

Dans cet exemple, étant donné que l'espace disponible est faible, le support d'identification 3 possède une forme réduite et ne comporte pas des indicateurs visuels d'identification ID1V, ID2V (Figure 11) mais uniquement un indicateur visuel d'orientation 5 de l'axe radio XR (Figure 10).

De manière préférée, le support d'identification 3 est fixé à l'aube 1 sur une zone qui n'est pas en contact avec le flux d'air à accélérer, c'est-à-dire, une zone aérodynamique. Aussi, le support d'identification 3 est de préférence fixé sur le pied de montage 11 ou sur une surface intérieure 12B de la plateforme 12 de l'aube 1. Dans cet exemple, le support d'identification 3 est fixé en surface de l'aube 1 mais il va de soi qu'il pourrait être monté dans le matériau composite de l'aube 1.

En référence à la figure 4, il va dorénavant être présenté un procédé de lecture individuel et collectif des données d'identification ID1, ID2 des aubes 1 d'une soufflante 110 d'une turbomachine 100, en particulier, un turbomoteur d'aéronef.

Dans cet exemple, un opérateur P utilise un appareil de lecture par radio-identification 4, connu en soi de l'homme du métier, et se place à distance de la turbomachine 100, en particulier, en amont de cette dernière de manière à être proche de la soufflante 110.

A l'aide d'un appareil de lecture par radio-identification 4, l'opérateur P émet de manière radio une requête de lecture REQ qui est reçue de manière radio par l'antenne radio 30 du support d'identification 3. En particulier, la requête de lecture REQ est reçue par le lobe de communication L1 de l'antenne radio 30 qui est amplifié du fait de son positionnement sur une zone de fixation dont les fibres longitudinales F sont alignées selon un axe de fibre privilégié XF qui est sensiblement aligné avec l'axe radio XR dudit lobe de communication L1.

En réponse à la requête de lecture REQ, l'antenne radio 30 du support d'identification 3 émet de manière radio les données d'identifications ID1, ID2 qui sont lues par l'appareil de lecture par radio-identification 4. En particulier, les données d'identifications ID1, ID2 sont émises par le lobe de communication L1 de l'antenne radio 30 qui est amplifié comme expliqué précédemment. Les données d'identifications ID1, ID2 lues sont stockées de manière informatique dans l'appareil de lecture par radio-identification 4.

Grâce à l'invention, un opérateur P peut obtenir de manière pratique, rapide et sans risque d'erreur les données d'identifications ID1, ID2 d'une aube 1. En outre, il n'est aucunement nécessaire de démonter la partie amont de la turbomachine 100 comme dans l'art antérieur.

De manière avantageuse, l'amplification du lobe de communication L1 permet d'échapper au blindage électromagnétique induit par les logements du disque 111 et par le cône 112 et de communiquer vers l'extérieur de manière optimale.

En fonction de la puissance d'émission de l'appareil de lecture par radio-identification 4 et de la distance entre l'appareil de lecture par radio-identification 4 et le support d'identification 3, un opérateur peut lire de manière individuelle un support d'identification 3 d'une aube 1 (puissance faible et distance faible) ou de manière collective une pluralité de supports d'identification 3 des aubes 1 d'une soufflante 110 (puissance élevée et distance importante). En pratique, une lecture est réalisée à une distance comprise entre 50cm et 1200cm.

## Revendications

1. Aube (1) pour soufflante (110) de turbomachine (100) d'aéronef s'étendant selon un axe (X) de turbomachine, l'aube (1) étant réalisée dans un matériau composite comportant une pluralité de fibres conductrices de l'électricité longitudinales (F) noyées dans une matrice non conductrice de l'électricité, l'aube (1) comportant au moins une zone de fixation sur laquelle est fixé un support d'identification (3) de l'aube (1), la zone de fixation comportant des fibres longitudinales (F) orientées selon un axe de fibre privilégié (XF), le support d'identification (3) comportant au moins une mémoire de stockage (30) d'une donnée d'identification (ID1, ID2) de l'aube (1) et au moins une antenne radio (31) comportant au moins un lobe de communication (L1) configuré pour recevoir une requête de lecture (REQ) et émettre en retour la donnée d'identification (ID1, ID2), le lobe de communication (L1) étant orienté selon un axe radio (XR) qui est écarté angulairement de l'axe de fibre privilégié (XF) de moins de 45°, de préférence, de moins de 22.5°.

2. Aube (1) selon la revendication 1, comprenant successivement un pied de montage (11) configuré pour être monté axialement selon l'axe (X) de turbomachine (X), une plateforme (12) et une pale de déviation d'air (13), la zone de fixation appartient au pied de montage (11).

3. Aube (1) selon la revendication 2, dans laquelle le pied de montage (11) comporte au moins une paroi latérale (11L), définie de manière azimutale par rapport à l'axe (X) de la turbomachine lorsque l'aube (1) est montée sur ladite turbomachine, la paroi latérale (11L) comportant des fibres longitudinales (F) dont l'axe de fibre privilégié (XF) s'étend sensiblement orthogonalement à l'axe (X) de la turbomachine lorsque l'aube (1) est montée sur ladite turbomachine, la zone de fixation appartenant à la paroi latérale (11L).

4. Aube (1) selon la revendication 2, dans laquelle le pied de montage (11) comporte au moins une paroi amont (11F), définie de manière axiale par rapport à l'axe (X) de la turbomachine lorsque l'aube (1) est montée sur ladite turbomachine, un flux d'air circulant d'amont vers l'aval dans la turbomachine, la paroi amont (11F) comporte des fibres longitudinales (F) dont l'axe de fibre privilégié (XF) s'étend sensiblement orthogonalement à l'axe (X) de la turbomachine lorsque l'aube (1) est montée sur ladite turbomachine, la zone de fixation appartenant à la paroi amont (11F).

5. Aube (1) selon la revendication 1, comprenant successivement un pied de montage (11) configuré pour être monté axialement selon l'axe de turbomachine (X), une plateforme (12) et une pale de déviation d'air (13), la zone de fixation appartenant à la plateforme (12).

6. Aube (1) selon l'une des revendications 1 à 5, dans laquelle le support d'identification (3) est du type radio-identification.

7. Aube (1) selon la revendication 6, dans laquelle le support d'identification (3) est un support d'identification (3) pour une zone de fixation métallique.

8. Aube (1) selon l'une des revendications 1 à 7, dans laquelle le support d'identification (3) comporte un corps (32) de forme allongée dans lequel sont montés la mémoire de stockage (30) et l'antenne radio (31), l'axe radio (XR) du lobe de communication (L1) s'étendant selon la longueur du corps (32).

9. Procédé de lecture d'un support d'identification (3) d'au moins une aube (1) de soufflante (110) selon l'une des revendications 1 à 8, comprenant :
i. une étape de réception, par voie radio, d'une requête de lecture (REQ) par l'antenne radio (31) du support d'identification (3) et
ii. une étape d'émission, par voie radio, d'au moins une donnée d'identification (ID1, ID2) de la mémoire de stockage (30) par l'antenne radio (31) du support d'identification (3).

## Patentansprüche

1. Schaufel (1) für ein Gebläse (110) einer Turbomaschine (100) eines Flugzeugs, die sich in einer Achse (X) der Turbomaschine erstreckt, wobei die Schaufel (1) aus einem Verbundmaterial hergestellt ist, das eine Vielzahl länglicher stromleitender Fasern (F) aufweist, die in eine nicht stromleitende Matrix eingelassen sind, wobei die Schaufel (1) mindestens einen Befestigungsbereich aufweist, auf dem ein Identifikationsträger (3) der Schaufel (1) befestigt ist, wobei der Befestigungsbereich längliche Fasern (F) aufweist, die in einer bevorzugten Faserachse (XF) ausgerichtet sind, wobei der Identifikationsträger (3) mindestens einen Speicher (30) für eine Identifikationsangabe (ID1, ID2) der Schaufel (1) und mindestens eine Funkantenne (31) aufweist, die mindestens einen Kommunikationsbereich (L1) aufweist, der ausgelegt ist, um eine Leseanforderung (REQ) zu erhalten und als Antwort die Identifikationsangabe (ID1, ID2) zu senden, wobei der Kommunikationsbereich (L1) in einer Funkachse (XR) ausgerichtet ist, die von der bevorzugten Faserachse (XF) weniger als 45°, vorzugsweise weniger als 22.5° winklig beabstandet ist.

2. Schaufel (1) nach Anspruch 1, die nacheinander einen Montagefuß (11), der ausgelegt ist, um axial in der Achse (X) der Turbomaschine (X) angebracht zu sein, eine Plattform (12) und ein Luftableitungsblatt (13) umfasst, wobei der Befestigungsbereich zum Montagefuß (11) gehört.

3. Schaufel (1) nach Anspruch 2, wobei der Montagefuß (11) mindestens eine Seitenwand (11L) aufweist, die im Verhältnis zur Achse (X) der Turbomaschine azimutal definiert ist, wenn die Schaufel (1) auf der Turbomaschine angebracht ist, wobei die Seitenwand (11L) längliche Fasern (F) aufweist, deren bevorzugte Faserachse (XF) sich etwa orthogonal zur Achse (X) der Turbomaschine erstreckt, wenn die Schaufel (1) auf der Turbomaschine angebracht ist, wobei der Befestigungsbereich zur Seitenwand (11L) gehört.

4. Schaufel (1) nach Anspruch 2, wobei der Montagefuß (11) mindestens eine stromaufwärtige Wand (11F) aufweist, die im Verhältnis zur Achse (X) der Turbomaschine axial definiert ist, wenn die Schaufel (1) auf der Turbomaschine angebracht ist, wobei ein Luftstrom von stromaufwärts nach stromabwärts in der Turbomaschine zirkuliert, wobei die stromaufwärtige Wand (11F) längliche Fasern (F) aufweist, deren bevorzugte Längsachse (XF) sich etwa orthogonal zur Achse (X) der Turbomaschine erstreckt, wenn die Schaufel (1) auf der Turbomaschine befestigt ist, wobei der Befestigungsbereich zur stromaufwärtigen Wand (11F) gehört.

5. Schaufel (1) nach Anspruch 1, die nacheinander einen Montagefuß (11), der ausgelegt ist, um axial in der Turbomaschinenachse (X) angebracht zu sein, eine Plattform (12) und ein Luftableitungsblatt (13) umfasst, wobei der Befestigungsbereich zur Plattform (12) gehört.

6. Schaufel (1) nach einem der Ansprüche 1 bis 5, wobei der Identifikationsträger (3) vom Typ Funkidentifikation ist.

7. Schaufel (1) nach Anspruch 6, wobei der Identifikationsträger (3) ein Identifikationsträger (3) für einen metallischen Befestigungsbereich ist.

8. Schaufel (1) nach einem der Ansprüche 1 bis 7, wobei der Identifikationsträger (3) einen länglich geformten Körper (32) aufweist, in dem der Speicher (30) und die Funkantenne (31) angebracht sind, wobei sich die Funkachse (XR) des Kommunikationsbereichs (L1) gemäß der Länge des Körpers (32) erstreckt.

9. Verfahren zum Lesen eines Identifikationsträgers (3) mindestens einer Schaufel (1) eines Gebläses (110) nach einem der Ansprüche 1 bis 8, umfassend:
i. einen Empfangsschritt über den Funkweg einer Leseanforderung (REQ) durch die Funkantenne (31) des Identifikationsträgers (3) und
ii. einen Sendeschritt über den Funkweg mindestens einer Identifikationsangabe (ID1, ID2) aus dem Speicher (30) durch die Funkantenne (31) des Identifikationsträgers (3).

## Claims

1. A vane (1) for a fan (110) of an aircraft turbomachine (100) extending along an axis (X) of the turbomachine, the vane (1) being made of a composite material comprising a plurality of longitudinal electrical conductive fibers (F) embedded in an electrically nonconductive matrix, the vane (1) comprising at least one fastening zone to which an identification medium (3) for identifying the vane (1) is fastened, the fastening zone comprises longitudinal fibers (F) oriented along a favored fiber axis (XF), the identification medium (3) comprising at least one memory (30) for storing an identification piece of data (ID1, ID2) of the vane (1) and at least one radio antenna (31) comprising at least one communication lobe (L1) configured to receive a read request (REQ) and transmit back the identification piece of data (ID1, ID2), the communication lobe (L1) being oriented along a radio axis (XR) which is angularly offset from the favored fiber axis (XF) by less than 45°, preferably by less than 22.5°.

2. The vane (1) according to claim 1, successively comprising a mounting root (11) configured to be axially mounted along the turbomachine axis (X), a platform (12) and an air deflection blade (13), the fastening zone belonging to the mounting root (11).

3. The vane (1) according to claim 2, wherein the mounting root (11) comprises at least one side wall (11L), azimuthally defined in relation to the axis (X) of the turbomachine when the vane (1) is mounted to said turbomachine, the side wall (11L) comprising longitudinal fibers (F) whose favored fiber axis (XF) extends substantially orthogonally to the axis (X) of the turbomachine when the vane (1) is mounted to said turbomachine, the fastening zone belonging to the side wall (11L).

4. The vane (1) according to claim 2, wherein the mounting root (11) comprises at least one upstream wall (11F), axially defined in relation to the axis (X) of the turbomachine when the vane (1) is mounted to said turbomachine, an air flow circulating from upstream to downstream in the turbomachine, the upstream wall (11F) comprises longitudinal fibers (F) whose favored fiber axis (XF) extends substantially orthogonally to the axis (X) of the turbomachine when the vane (1) is mounted to said turbomachine, the fastening zone belonging to the upstream wall (11F).

5. The vane (1) according to claim 1, successively comprising a mounting root (11) configured to be axially mounted along the turbomachine axis (X), a platform (12) and an air deflection blade (13), the fastening zone belonging to the platform (12).

6. The vane (1) according to one of claims 1 to 5, wherein the identification medium (3) is of the radio frequency identification type.

7. The vane (1) according to claim 6, wherein the identification medium (3) is an identification medium (3) for a metal fastening zone.

8. The vane (1) according to one of claims 1 to 7, wherein the identification medium (3) comprises an elongate shape body (32) in which the storage memory (30) and the radio antenna (31) are mounted, the radio axis (XR) of the communication lobe (L1) extending along the length of the body (32).

9. A method for reading an identification medium (3) of at least one fan (110) vane (1) according to one of claims 1 to 8, comprising:
i. a step of radio receiving a read request (REQ) by the radio antenna (31) of the identification medium (3) and
ii. a step of radio transmitting at least one identification piece of data (ID1, ID2) from the storage memory (30) by the radio antenna (31) of the identification medium (3).
